(19)

**Europäisches Patentamt**
**European Patent Office**
**Office européen des brevets**

(11) **EP 4 742 604 A1**

(12) **EUROPEAN PATENT APPLICATION**

(43) Date of publication:
**13.05.2026 Bulletin 2026/20**

(21) Application number: **25213219.6**

(22) Date of filing: **04.11.2025**

(51) International Patent Classification (IPC):
**H04L 27/26** *(2006.01)*

(52) Cooperative Patent Classification (CPC):
**H04L 27/2639; H04L 27/2613**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.11.2024 KR 20240157565**
**18.11.2024 KR 20240163938**

(71) Applicant: **Korea Advanced Institute of Science and Technology**
**Daejeon 34141 (KR)**

(72) Inventors:
• **PARK, Hyuncheol**
**34141 Daejeon (KR)**
• **HAN, Junhee**
**34141 Daejeon (KR)**

(74) Representative: **Boco IP Oy Ab**
**Kansakoulukatu 3**
**00100 Helsinki (FI)**

(54) **OTFS BASED WAVEFORM DESIGN FOR ISAC SYSTEM AND SENSING METHOD**

(57) Disclosed are a method for transmission waveform design for an orthogonal time frequency space (OTFS)-based integrated sensing and communication (ISAC) system, and sensing technology. A sensing method for an OTFS-based ISAC system may include generating a time-frequency domain sample including a delay pilot and a Doppler pilot each that is designed in the time-frequency domain based on data to be transmitted; generating an integrated sensing and communication (ISAC) signal through an orthogonal frequency division multiplexing (OFDM) modulation technique for the generated time-frequency domain sample; and acquiring a sensing parameter through a reflected signal received from a sensing target as the generated ISAC signal is transmitted.

**EP 4 742 604 A1**

**Description**

CROSS-REFERENCE TO RELATED APPLICATION(S)

BACKGROUND

1. Field of the Invention

Example embodiments of the following description relate to technology for waveform design and sensing parameter estimation of an integrated sensing and communication (ISAC) system using orthogonal time frequency space (OTFS) modulation.

2. Description of the Related Art

Orthogonal time frequency space (OTFS) modulation maps a quadrature amplitude modulation (QAM) data symbol to the delay-Doppler domain to be spread in the time-frequency domain. This technology is attracting attention as a waveform capable of replacing orthogonal frequency division multiplexing (OFDM) that maps a data symbol to the frequency domain in a time-varying channel.

It is known that the time-varying channel has a sparse form when transformed to the delay-Doppler domain, and each parameter represents the radial distance between a transmitter and a target and the radial velocity of the target. Therefore, radar sensing and channel estimation may be integrated.

A transmitter of a communication system transmits a pilot alone for channel estimation or simultaneously transmits the pilot by adding the pilot to a communication waveform. A transmission signal is reflected from an object and returns to the transmitter or reaches a target receiver. In both cases, the signal is modeled as having passed through each corresponding channel.

In the delay-Doppler domain, resources for the pilot and resources for a guard area need to be allocated for channel estimation. Here, the size of researches varies depending on the pilot and the guard area depends on Doppler dispersion and delay of the channel. The Doppler dispersion is not localized on a delay-Doppler grid due to presence of fractional Doppler. Accordingly, the overhead by the pilot and the guard area becomes very large proportional to the product of the delay and the Doppler dispersion.

Also, if simultaneously considering Doppler and delay when performing pulse compression, it is difficult to use a high-speed algorithm, which leads to increasing complexity.

SUMMARY

The present invention proposes a method of reducing the overhead by measuring delay and Doppler from different pilots, realizing fast pulse compression using a fast Fourier transform algorithm, and at the same time, generating communication data into a transmittable orthogonal time frequency space (OTFS) frame, and a sensing parameter estimation method.

According to an aspect, a sensing method for an orthogonal time frequency space (OTFS)-based integrated sensing and communication (ISAC) system may include generating a time-frequency domain sample including a delay pilot and a Doppler pilot each that is designed in the time-frequency domain based on data to be transmitted; generating an integrated sensing and communication (ISAC) signal through an orthogonal frequency division multiplexing (OFDM) modulation technique for the generated time-frequency domain sample; and acquiring a sensing parameter through a reflected signal received from a sensing target as the generated ISAC signal is transmitted.

The generating of the time-frequency domain sample may include generating a data matrix including random quadrature amplitude modulation (QAM) symbols to form the Doppler pilot, generating the Doppler pilot in the delay-Doppler domain using the generated data matrix, and transforming the Doppler pilot generated in the delay-Doppler domain to the time-frequency domain through Fourier transform.

The generating of the time-frequency domain sample may include generating the delay pilot for estimating delay in the time-frequency domain.

The generating of the time-frequency domain sample may include generating the time-frequency domain sample including the Doppler pilot transformed to the time-frequency domain and the generated delay pilot.

The acquiring may include acquiring a plurality of time domain samples corresponding to a specific OFDM symbol, selecting a sample with the largest amplitude, and if the magnitude of the selected sample with the largest amplitude in a specific delay slot of the time domain is greater than or equal to a threshold, determining that the reflected signal from the sensing target is returned after being delayed by a corresponding time interval.

The acquiring may include estimating delay and a channel coefficient using the determined reflected signal, and estimating Doppler and a final channel coefficient using the estimated delay and channel coefficient.

The acquiring may include acquiring fractional Doppler by dividing the magnitude of the channel coefficient acquired through the delay pilot and Doppler pilot power by the magnitude of the Doppler pilot, by generating an equation for a sine function, and by converting the generated equation to a polynomial equation using Talyor expansion.

According to an aspect, in a non-transitory computer-readable recording medium storing a computer program to execute a sensing method for an OTFS-based ISAC system, the sensing method may include generating a time-frequency domain sample including a delay pilot and a Doppler pilot each that is designed in the time-frequency domain based on data to be transmitted; generating an integrated sensing and communication (ISAC) signal through an orthogonal frequency division multiplexing (OFDM) modulation technique for the generated time-frequency domain sample; and acquiring a sensing parameter through a reflected signal received from a sensing target as the generated ISAC signal is transmitted.

According to an aspect, an OTFS-based ISAC system may include a sample generator configured to generate a time-frequency domain sample including a delay pilot and a Doppler pilot each that is designed in the time-frequency domain based on data to be transmitted; a signal generator configured to generate an integrated sensing and communication (ISAC) signal through an orthogonal frequency division multiplexing (OFDM) modulation technique for the generated time-frequency domain sample; and a sensing acquisition unit configured to acquire a sensing parameter through a reflected signal received from a sensing target as the generated ISAC signal is transmitted.

The sample generator may be configured to generate a data matrix including random quadrature amplitude modulation (QAM) symbols to form the Doppler pilot, to generate the Doppler pilot in the delay-Doppler domain using the generated data matrix, and to transform the Doppler pilot generated in the delay-Doppler domain to the time-frequency domain through Fourier transform.

The sample generator may be configured to generate the delay pilot for estimating delay in the time-frequency domain.

The sample generator may be configured to generate the time-frequency domain sample including the Doppler pilot transformed to the time-frequency domain and the generated delay pilot.

The sensing acquisition unit may be configured to acquire a plurality of time domain samples corresponding to a specific OFDM symbol, to select a sample with the largest amplitude, and to if the magnitude of the selected sample with the largest amplitude in a specific delay slot of the time domain is greater than or equal to a threshold, determine that the reflected signal from the sensing target is returned after being delayed by a corresponding time interval.

The sensing acquisition unit may be configured to estimate delay and a channel coefficient using the determined reflected signal, and to estimate Doppler and a final channel coefficient using the estimated delay and channel coefficient.

The sensing acquisition unit may be configured to acquire fractional Doppler by dividing the magnitude of the channel coefficient acquired through the delay pilot and Doppler pilot power by the magnitude of the Doppler pilot, by generating an equation for a sine function, and by converting the generated equation to a polynomial equation using Talyor expansion.

Unlike the previously proposed two-dimensional (2D) correlator or matching filter algorithm ($\sim O(M^2 N^2)$), the proposed technique may find a sensing parameter using only one-dimensional (1D) search and fast Fourier transform (FFT) ($\sim O(M + N + M \log M)$).

Although data is mapped to the delay-Doppler domain, it is possible to generate a desired sensing pilot at the target frequency of the time-frequency domain.

A delay pilot and a Doppler pilot may be independently designed. For example, the power of the Doppler pilot and the power of the delay pilot may be made different, or the delay pilot may be freely set to a sequence other than an impulse.

BRIEF DESCRIPTION OF THE DRAWINGS

These and/or other aspects, features, and advantages of the invention will become apparent and more readily appreciated from the following description of embodiments, taken in conjunction with the accompanying drawings of which:

FIG. 1 is a diagram for explaining a transmitter and the operation of the transmitter in an example embodiment;
FIG. 2 is a graph showing the results of independently sensing delay and Doppler using a proposed pilot in an example embodiment;
FIG. 3 is a graph showing the results of independently sensing delay and Doppler using a proposed pilot in an example embodiment;
FIG. 4 is a block diagram illustrating an integrated sensing and communication (ISAC) system in an example embodiment; and
FIG. 5 is a flowchart illustrating a sensing method for an orthogonal time frequency space (OTFS)-based ISAC system in an example embodiment.

DETAILED DESCRIPTION

Hereinafter, example embodiments will be described with reference to the accompanying drawings.

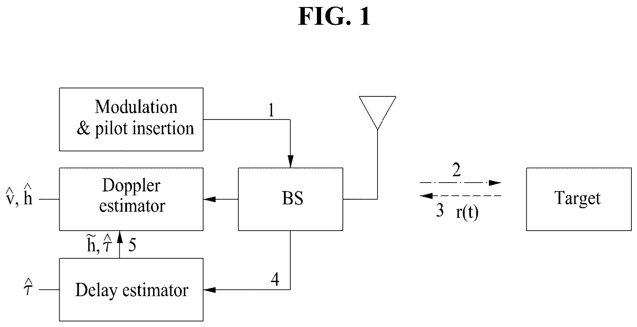

FIG. 1 is a diagram for explaining a transmitter and the operation of the transmitter in an example embodiment.

In an example embodiment, it is assumed that a transmitter and a receiver are configured as a single antenna. A situation in which only a single target is present in a wireless channel is considered. Also, it is assumed that no fractional delay occurs with the assumption that a sufficiently large bandwidth is occupied. The transmitter needs to simultaneously transmit data and a pilot for channel estimation at the receiver. A sensing parameter needs to be acquirable although information on an agreed-upon pilot signal is incomplete. The sensing parameter needs to be acquirable using a relatively low-complexity algorithm, such as a fast Fourier transform (FFT) algorithm. The issue that resources allocated to a pilot are proportional to the product of delay dispersion and Doppler dispersion. In the time domain, there should be fewer cases in which very large peaks appear compared to the average power. An orthogonal time frequency space (OTFS) frame generation method that may address this issue and a sensing parameter acquisition method using the same are described.

In an example embodiment, a delay pilot and a Doppler pilot for estimating delay and Doppler may be independently designed, and the independently designed delay pilot and Doppler pilot may be combined.

Also, delay may be designed to be estimable through a threshold.

Also, a pilot for estimating Doppler may be designed to enable pulse compression through Fourier transform. That is, this is equivalent to transmitting an impulse in the frequency domain.

Although a Doppler pilot of a previous section is designed, this may be simply added to a transmission signal and transmitted. In this case, data interference may occur during Doppler estimation. Therefore, a pilot signal to be added in the delay-Doppler domain may be calculated to have the form required in the previous section in the time-frequency domain.

Also, since power concentration in the delay-Doppler domain frequently produces values greater than the average power in time domain waveform, which causes a nonlinear behavior of a power amplifier, and accordingly a pilot is distributed to a plurality of delay-Doppler domain slots.

Also, during discrete Fourier transform (DFT), a distortion occurs at an observation point (DFT slot) due to a fractional Doppler shift. Using this, fractional Doppler is calculated by comparing a size of a channel coefficient and a magnitude spectrum in the corresponding slot.

Initially, a transmitter of an OTFS-based integrated sensing and communication (ISAC) system may prepare data to be transmitted, generates a data sample to be added to the delay-Doppler domain to form a desired time-frequency domain pilot based on the data to be transmitted, may generate an integrated sensing and communication (ISAC) signal through orthogonal frequency division multiplexing (OFDM) using the generated data sample and then transmit the generated ISAC signal. Accordingly, the transmitter may perform sensing through a reflected signal that is received from a sensing target. Here, OFDM refers to technology for allocating and transmitting a single frequency-domain transmission sample to each of M orthogonal subcarriers in the frequency domain. The transmitter may form a single frame by collecting the fixed number (N) of OFDM symbols and transmitting the same at a time.

It is assumed that a waveform of an integrated sensing signal occupies a closed section $[0, NT_0]$ in the time domain and occupies a closed section $[0, M\Delta f]$ in the frequency domain. In this case, the entire frame length is $NT_0$, and the sampling period is $1/M\Delta f$. Here, $T_0$ denotes the duration of an OFDM symbol and $\Delta f$ denotes an OFDM subcarrier spacing. Each of parameters may vary depending on system specifications.

More specifically, (1) the transmitter of the OTFS-based ISAC system may generate a time-frequency domain sample including a delay pilot and a Doppler pilot each designed in the time-frequency domain based on data to be transmitted. The transmitter may transform a Doppler pilot sample generated in the delay-Doppler domain to the time-frequency domain through inverse symmetric fast Fourier transform (ISFFT) and then reinforce the same with a delay pilot and a guard for delay estimation.

The transmitter may prepare the data to be transmitted and may generate a Doppler pilot sample $\mathbf{P}_{DD}$ in the delay-Doppler (DD) domain by predetermined waveform based on the prepared data to be transmitted. The transmitter may generate a data matrix $\mathbf{X}_{DD} \in \mathbb{C}^{M \times N_{data}}$ including random quadrature amplitude modulation (QAM) symbols to form the Doppler pilot. Here, $N_{data}$ denotes a value acquired by excluding the number of OFDM symbols allocated for pilot from N. Then, using the generated data matrix, the transmitter may generate the delay-Doppler domain pilot $\mathbf{P}_{DD} \in \mathbb{C}^{M \times N_{data}}$ as follows. $\mathbf{F}_M$ denotes an M-DFT matrix normalized with $1/\sqrt{M}$.

$$\mathbf{F}_M \mathbf{P}_{DD} = \begin{bmatrix} \text{Impulse} - \text{sum}(\mathbf{X}_{DD}) \\ \text{o.w.} \end{bmatrix}.$$

An impulse of a first row is a row vector $\mathbb{C}^{1 \times N_{\text{data}}}$ in which a first entry alone has a non-zero value. Here, impulse power may be arbitrarily adjusted. If this value is Pw, the right side is as follows in detail.

$$\mathbf{F}_M \mathbf{P}_{\mathrm{DD}} = \begin{bmatrix} \sqrt{MN_{data}Pw} - \sum_{m=0}^{M-1} \mathbf{X}_{\mathrm{DD}}[m,0] & \cdots & \sum_{m=0}^{M-1} \mathbf{X}_{\mathrm{DD}}[m, N_{data}-1] \\ & \mathrm{o.\,w.} & \end{bmatrix}$$

Here, the first row of $\mathbf{F}_M \mathbf{P}_{\mathrm{DD}}$ needs to be equal to a first row vector of the right side. That is, the sum of each column of $\mathbf{P}_{\mathrm{DD}}$ needs to be equal to each entry of the first row of the right side. Therefore, each element of an $n^{\text{th}}$ column of $\mathbf{P}_{\mathrm{DD}}$ has the following constant value.

$$\mathbf{P}_{\mathrm{DD}}[m,n] = p_n = \frac{\left(\sqrt{MN_{\text{data}}Pw} - \mathrm{sum}(\mathbf{X}_{\mathrm{DD}})[n]\right)}{M}.$$

Then, the transmitter may generate the delay pilot for estimating delay. Here, all frequency components may be equally allocated to form impulse in the time domain. This delay pilot may be generated in the time-frequency domain. Meanwhile, to prevent interference by a cyclic prefix (CP) for an OTFS frame itself, a last OFDM symbol does not carry any data.

The transmitter may combine all of the designed Doppler pilot and delay pilot, and may acquire the time-frequency domain sample as follows.

$$\mathbf{X}_{\mathrm{TF}} = \{\mathbf{P}_{\mathrm{del}} : \mathbf{F}_M(\mathbf{X}_{\mathrm{DD}} + \mathbf{P}_{\mathrm{DD}})\mathbf{F}_{N-2}^{\mathrm{H}} : \mathbf{G}\},$$

$\mathbf{P}_{\mathrm{del}}$ denotes an all-one column vector, and G denotes an all-zero column vector. The collon denotes augmentation. $\mathbf{F}_M(\mathbf{X}_{\mathrm{DD}} + \mathbf{P}_{\mathrm{DD}})\mathbf{F}_N^{\mathrm{H}}$ in the middle relates to transforming the delay-Doppler domain sample $\mathbf{X}_{\mathrm{DD}} + \mathbf{P}_{\mathrm{DD}}$ to the time-frequency domain, and is a matrix representation of finite symplectic Fourier transform (SFFT) that is the basic transforamtion of OTFS.

The first row of $\mathbf{X}_{\mathrm{TF}}$ is as follows:

$$\mathbf{X}_{\mathrm{TF}}[0,:] = \begin{bmatrix} 1 & \sqrt{Pw} & \sqrt{Pw} & \cdots & \sqrt{Pw} & 0 \end{bmatrix}$$

Here, 1 on the left is a value corresponding to a first frequency component of the delay pilot. If this value is increased by √Pw times, the delay pilot $\mathbf{P}_{\mathrm{del}}$ may lose the shape of perfect impulse in the time domain, but this may be compensated for through signal processing at a reception end.

The previous section relates to processing that designs a plurality of complex sinusoids, each Doppler pilot, to be continuously concatenated by distorting a single frequency (second) component of the delay pilot, and thereby models the influence of delay to be modeled as simple phase rotation.

For convenience of signal processing, the transmitter may translate the pilot from the frequency domain to the discussion domain. The transmitter may perform masking using a DFT vector for each column of the delay-Doppler domain sample $\mathbf{X}_{\mathrm{DD}} + \mathbf{P}_{\mathrm{DD}}$, and may cyclically shift the time-frequency domain sample $\mathbf{F}_M(\mathbf{X}_{\mathrm{DD}} + \mathbf{P}_{\mathrm{DD}})\mathbf{F}_N^{\mathrm{H}}$ by one slot in the direction in which the frequency increases. That is, the following operation may be performed. Here, $\odot$ denotes the point-wise product.

$$(\mathbf{X}_{\mathrm{DD}} + \mathbf{P}_{\mathrm{DD}}) \odot \mathbf{W},$$

$$\mathbf{W} = [\mathbf{w} \ \mathbf{w} \ \dots \ \mathbf{w}], \qquad \mathbf{w} = \begin{bmatrix} e^{j2\pi \frac{0}{M}} \\ \cdots \\ e^{j2\pi \frac{M-1}{M}} \end{bmatrix}.$$

When a time-frequency domain shift is performed in this manner, the second frequency component of the delay pilot is increased by $\sqrt{Pw}$ times.

(2) The transmitter may generate an integrated sensing and communication (ISAC) signal by transforming a Doppler pilot signal (signal sample) transformed to the time-frequency domain through OFDM modulation, and may transmit the generated ISAC signal.

(3) A portion of the transmitted ISAC signal may be reflected and returned to the transmitter.

When s(t) is transmitted through OFDM modulation on the generated ISAC signal, the reflected wave r(t) returns to the transmitter. This is modeled as follows:

$$r(t) = \sum_{i=1}^{P} h_i s(t - \tau_i) e^{j2\pi\nu_i t}.$$

(4) The transmitter may estimate delay and a channel coefficient through a delay estimator. A process of performing sensing (acquiring Doppler shift $\nu$ and delay $\tau$) is described. Initially, the transmitter may estimate a delay value through the delay estimator. The transmitter may remove a CP and then, may acquire M time domain samples corresponding to a first OFDM symbol and may select a sample with the largest amplitude.

Here, the transmitter may perform rough compensation by performing discrete Fourier transform (DFT) on a total of MN frame samples and by multiplying [N+1:N+N], which is a frequency index corresponding to a second subcarrier, by $1/\sqrt{Pw}$.

Then, if the magnitude of a sample in a specific delay slot in the time domain is greater than or equal to a threshold, the transmitter may determine that a reflected signal from a sensing target is returned after being delayed by a corresponding time interval.

$$\hat{t} = \frac{1}{M\Delta f} \times \underset{0 \leq n < M}{\operatorname{argmin}} |r[n]|.$$

Meanwhile, the channel coefficient may be estimated as follows.

$$\tilde{h} = \frac{r[\hat{t}(M\Delta f)]}{\sqrt{M}}.$$

The above channel coefficient has a value that is deviated by $2\pi\nu\tau$ compared to an original channel coefficient.

(5) The transmitter may estimate Doppler and a final channel coefficient from a Doppler estimator based on the delay and the channel coefficient estimated from the delay estimator.

For the discrete Fourier transformed MN samples, only the band [$\Delta f$ - $f_{\text{Dmax}}$, $\Delta f$ - $f_{\text{Dmax}}$] corresponding to the Doppler dispersion near a first subcarrier may be filtered using a bandpass filter. $f_{\text{Dmax}}$ is equal to the maximum Doppler dispersion predicted by a radar (or a larger value than a value acquired by adding margin).

Using a DFT bandpass filter, the following may be acquired by performing sampling from a second OFDM symbol.

$$r_{\text{bp}}[n + M] = \sqrt{\frac{Pw}{M}} e^{\frac{j2\pi n}{M}} \sum_{i=1}^{P} h_i e^{-j2\pi\Delta f \tau_i} e^{\frac{j2\pi\nu_i}{\Delta f}} e^{\frac{j2\pi\nu_i n}{M\Delta f}} \quad (n = 0, \ldots, (N-2)M - 1).$$

P denotes the number of targets and a case in which P=1 is considered herein.

For convenience of signal processing, downsampling may be performed using a factor of (N-2) (i.e., sampling frequency is decreased by 1/(N-2) times and a total of M samples are acquired).

$$r_{\text{bp}}[m(N-2)] \triangleq r_{\text{ds}}[m] = e^{\frac{j2\pi m}{M/(N-2)}} \sqrt{\frac{Pw}{M}} h e^{-j2\pi\Delta f \tau} e^{\frac{j2\pi\nu}{\Delta f}} e^{\frac{j2\pi(k+\kappa)m}{M}}.$$

However, modeling is performed using $k + \kappa = (N - 2)T_0\nu$, $- 0.5 \leq \kappa < 0.5$ and $k \in \mathbb{Z}$.

Performing DFT allows for frequency component analysis as follows.

$$R_{\mathrm{ds}}[k'] = \frac{\sqrt{Pw}}{M} h e^{-j2\pi\Delta f\tau} e^{\frac{j2\pi v}{\Delta f}} \frac{e^{j2\pi\kappa} - 1}{e^{\frac{j2\pi(k+\kappa-k'+N-2)}{M}} - 1}$$

A peak point may be viewed as an integer part (k) MLE of the Doppler shift,

$$\hat{k} = \underset{k'}{\operatorname{argmax}} \ |R_{\mathrm{ds}}[k']|,$$

Performing approximation at a corresponding point, it may be as follows.

$$R_{\mathrm{ds}}[\hat{k}] \approx \sqrt{Pw} h e^{-j2\pi\Delta f\tau} e^{\frac{j2\pi v}{\Delta f}} e^{j\pi\frac{M-1}{M}\kappa} \mathrm{sinc}(\kappa).$$

Taking the magnitude of this value may calculate $\kappa$. That is,

$$\mathrm{sinc}(\kappa) = \frac{|R_{\mathrm{ds}}[k]|}{\sqrt{Pw}\ |\tilde{h}|}.$$

If approximation is performed again,

$$\mathrm{sinc}(\kappa) = \sin(\pi\kappa)/(\pi\kappa) \approx \left((\pi\kappa) - \frac{1}{6}(\pi\kappa)^3 + \frac{1}{120}(\pi\kappa)^5\right)/(\pi\kappa)$$
$$= 1 - \frac{1}{6}(\pi\kappa)^2 + \frac{1}{120}(\pi\kappa)^4.$$

Therefore,

$$|\hat{\kappa}| = \begin{cases} 0 & \frac{|R_{\mathrm{ds}}[k]|}{\sqrt{Pw}\ |\tilde{h}|} \geq 1 \\ 0.5 & \frac{|R_{\mathrm{ds}}[k]|}{\sqrt{Pw}\ |\tilde{h}|} \leq \mathrm{sinc}(0.5) \\ \frac{1}{\pi}\sqrt{10 - \sqrt{120\frac{|R_{\mathrm{ds}}[k]|}{\sqrt{Pw}\ |\tilde{h}|} - 20}} & \mathrm{o.\,w.} \end{cases}$$

Since this function is even, the sign of kappa may not be determined. Therefore, the following method may be used. Initially, after finding a peak, magnitudes of Doppler slots (k+1 and k-1) on both sides of the peak are compared. If a (k+1)-th slot is larger, the sign is determined as positive, and otherwise, the sign is determined as negative.

The estimated Doppler frequency is as follows.

$$\hat{v} = (\hat{k} + \hat{\kappa}) \times \frac{\Delta f}{(N-2)} - \Delta f.$$

The estimated channel coefficient is as follows:

$$\hat{h} = \tilde{h} e^{-j2\pi\hat{\tau}\hat{v}}.$$

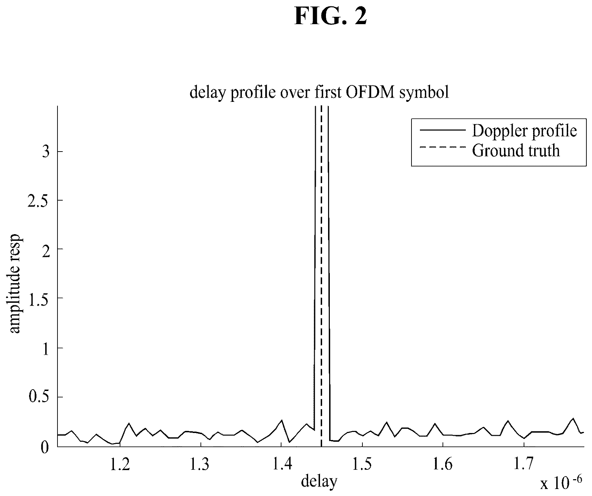

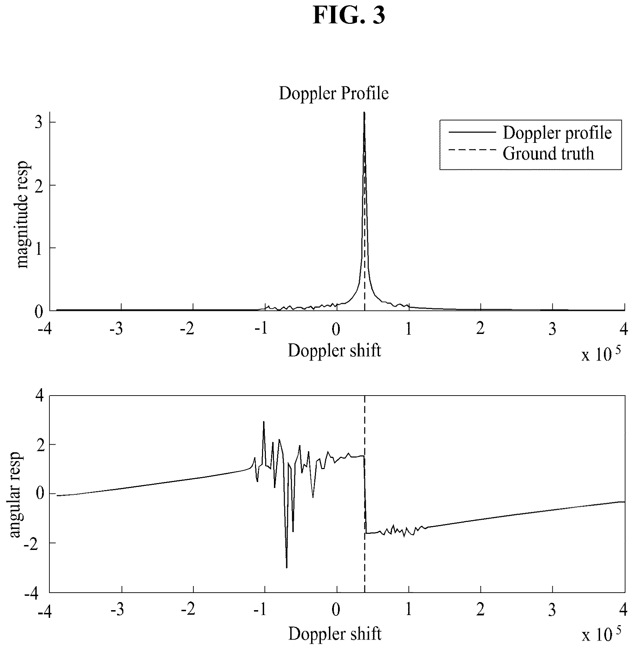

FIGS. 2 and 3 are graphs showing the results of independently sensing delay and Doppler using a proposed pilot

7

in an example embodiment.

An OTFS waveform transmitter using an OFDM modulation technique may generate a Doppler pilot using data to be transmitted and then separately embed a pilot for detecting delay and may acquire a parameter during sensing.

A method of forming a pilot in a transmitter is described. The transmitter may acquire a desired Doppler pilot in the time-frequency domain by adding a pilot signal that is a function of data to delay-Doppler domain data and then may complete a frame by reinforcing two OFDM symbols corresponding to a delay pilot (all one in frequency domain) and a guard symbol (all zero) in the time-frequency domain.

The transmitter may extract a sensing parameter through a reflected signal. The transmitter may acquire fractional Doppler by dividing the magnitude of the channel coefficient acquired through the delay pilot and Doppler pilot power by the magnitude of the Doppler pilot, by generating an equation for a sinc function, and by converting the generated equation to a polynomial equation using Talyor expansion.

FIGS. 2 and 3 show the results of independently sensing delay and Doppler using the proposed pilot. Referring to FIGS. 2 and 3, it can be seen that an interference-free pilot signal is generated in the time-frequency domain. Also, it is possible to reduce the overhead and to mitigate high estimation complexity by separately estimating delay and Doppler.

The technique proposed in the example embodiment may find a sensing parameter using only one-dimensional search and FFT ($\sim O(M + N + M \log M)$), unlike the previously proposed two-dimensional (2D) correlator or matched filter algorithm ($\sim O(M^2 N^2)$). Also, although data is mapped to the delay-Doppler domain, a desired sensing pilot may be generated at the target frequency of the time-frequency domain. Also, the delay pilot and the Doppler pilot may be independently designed. For example, the power of the Doppler pilot and the power of the delay pilot may be made different, or the delay pilot may be freely set to a sequence other than an impulse.

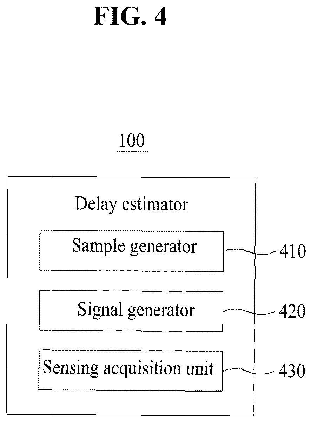

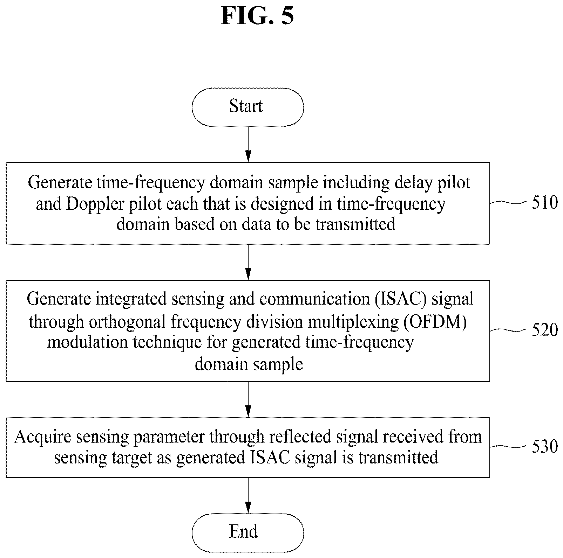

FIG. 4 is a block diagram illustrating an integrated sensing and communication (ISAC) system in an example embodiment, and FIG. 5 is a flowchart illustrating a sensing method in an example embodiment.

A processor of an ISAC system 100 may include a sample generator 410, a signal generator 420, and a sensing acquisition unit 430. The components of the processor may be representations of different functions performed by the processor in response to a control command provided from a program code stored in the ISAC system 100. The processor and the components of the processor may control the ISAC system 100 that performs operations 510 to 530 included in the sensing method of FIG. 5. Here, the processor and the components of the processor may be implemented to execute an instruction according to a code of at least one program and a code of an operating system (OS) included in a memory.

The processor may load, to the memory, a program code stored in a file of a program for the sensing method. For example, when the program is executed in the ISAC system 100, the processor may control the ISAC system 100 to load the program code from the file of the program to the memory under control of the OS. Here, the sample generator 410, the signal generator 420, and the sensing acquisition unit 430 of the processor may be different functional representations of the processor for executing operations 510 to 530 by executing an instruction of each corresponding portion in the program code loaded to the memory.

In operation 510, the sample generator 410 may generate a time-frequency domain sample including a delay pilot and a Doppler pilot each that is designed in the time-frequency domain based on data to be transmitted. The sample generator 410 may generate a data matrix including random QAM symbols to form the Doppler pilot, may generate the Doppler pilot in the delay-Doppler domain using the generated data matrix, and may transform the Doppler pilot generate in the delay-Doppler domain to the time-frequency domain through Fourier transform. The sample generator 410 may generate the delay pilot for estimating delay in the time-frequency domain. The sample generator 410 may generate the time-frequency domain sample including the Doppler pilot transformed to the time-frequency domain and the generated delay pilot.

In operation 520, the signal generator 420 may generate an integrated sensing and communication (ISAC) signal through an OFDM modulation technique for the generated time-frequency domain sample.

In operation 530, the sensing acquisition unit 430 may acquire a sensing parameter through a reflected signal received from a sensing target as the generated ISAC signal is transmitted. The sensing acquisition unit 430 may acquire a plurality of time domain samples corresponding to a specific OFDM symbol, may select a sample with the largest amplitude, and if the magnitude of the selected sample with the largest amplitude in a specific delay slot of the time domain is greater than or equal to a threshold, may determine that the reflected signal from the sensing target is returned after being delayed by a corresponding time interval. The sensing acquisition unit 430 may estimate delay and a channel coefficient using the determined reflected signal, and may estimate Doppler and a final channel coefficient using the estimated delay and channel coefficient. The sensing acquisition unit 430 may acquire fractional Doppler by dividing the magnitude of the channel coefficient acquired through the delay pilot and Doppler pilot power by the magnitude of the Doppler pilot, by generating an equation for a sine function, and by converting the generated equation to a polynomial equation using Talyor expansion.

The systems or the apparatuses described herein may be implemented using hardware components, software components, or combination of the hardware components and the software components. For example, the apparatuses and the components described herein may be implemented using one or more general-purpose or special purpose

**EP 4 742 604 A1**

computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS), and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be permanently or temporarily embodied in any type of machine, component, physical equipment, virtual equipment, or a computer storage medium or device to be interpreted by the processing device or to provide an instruction or data to the processing device. The software also may be distributed over network coupled computer systems so that the software is stored and executed in a distributed fashion. The software and data may be stored by one or more computer readable storage media.

The methods according to example embodiments may be configured in a form of program instructions that may be performed through various computer methods and recorded in computer-readable media. The computer-readable media may include, alone or in combination with program instructions, data files and data structures. The program instructions recorded in the media may be specially designed and configured for the example embodiments, or may be known and available to those in the computer software art. Examples of the media may include magnetic media such as hard disks, floppy disks, and magnetic tapes; optical media such as CD-ROM and DVDs; magneto-optical media such as floptical disks; and hardware devices that are specially configured to store and perform program instructions, such as ROM, RAM, flash memory, and the like. Examples of the program instructions include an advanced language code executable by a computer using an interpreter, as well as a machine language code as produced by a compiler.

Although the example embodiments are described with reference to some specific example embodiments and accompanying drawings, it will be apparent to one of ordinary skill in the art that various alterations and modifications in form and details may be made in these example embodiments without departing from the spirit and scope of the claims and their equivalents. For example, suitable results may be achieved if the described techniques are performed in different order, and/or if components in a described system, architecture, device, or circuit are combined in a different manner, and/or replaced or supplemented by other components or their equivalents.

Therefore, other implementations, other example embodiments, and equivalents of the claims are to be construed as being included in the claims.

**Claims**

1.  A sensing method for an orthogonal time frequency space (OTFS)-based integrated sensing and communication (ISAC) system, the sensing method comprising:

     generating a time-frequency domain sample including a delay pilot and a Doppler pilot each that is designed in the time-frequency domain based on data to be transmitted;
     generating an integrated sensing and communication (ISAC) signal through an orthogonal frequency division multiplexing (OFDM) modulation technique for the generated time-frequency domain sample; and
     acquiring a sensing parameter through a reflected signal received from a sensing target as the generated ISAC signal is transmitted.

2.  The sensing method of claim 1, wherein the generating of the time-frequency domain sample comprises generating a data matrix including random quadrature amplitude modulation (QAM) symbols to form the Doppler pilot, generating the Doppler pilot in the delay-Doppler domain using the generated data matrix, and transforming the Doppler pilot generated in the delay-Doppler domain to the time-frequency domain through Fourier transform.

3.  The sensing method of claim 2, wherein the generating of the time-frequency domain sample comprises generating the delay pilot for estimating delay in the time-frequency domain.

4.  The sensing method of claim 2, wherein the generating of the time-frequency domain sample comprises generating the time-frequency domain sample including the Doppler pilot transformed to the time-frequency domain and the generated delay pilot.

9

5. The sensing method of claim 1, wherein the acquiring comprises acquiring a plurality of time domain samples corresponding to a specific OFDM symbol, selecting a sample with the largest amplitude, and if the magnitude of the selected sample with the largest amplitude in a specific delay slot of the time domain is greater than or equal to a threshold, determining that the reflected signal from the sensing target is returned after being delayed by a corresponding time interval.

6. The sensing method of claim 5, wherein the acquiring comprises estimating delay and a channel coefficient using the determined reflected signal, and estimating Doppler and a final channel coefficient using the estimated delay and channel coefficient.

7. The sensing method of claim 6, wherein the acquiring comprises acquiring fractional Doppler by dividing the magnitude of the channel coefficient acquired through the delay pilot and Doppler pilot power by the magnitude of the Doppler pilot, by generating an equation for a sine function, and by converting the generated equation to a polynomial equation using Talyor expansion.

8. A non-transitory computer-readable recording medium storing a computer program to execute a sensing method for an orthogonal time frequency space (OTFS)-based integrated sensing and communication (ISAC) system, wherein the sensing method comprises:

   generating a time-frequency domain sample including a delay pilot and a Doppler pilot each that is designed in the time-frequency domain based on data to be transmitted;
   generating an integrated sensing and communication (ISAC) signal through an orthogonal frequency division multiplexing (OFDM) modulation technique for the generated time-frequency domain sample; and
   acquiring a sensing parameter through a reflected signal received from a sensing target as the generated ISAC signal is transmitted.

9. An orthogonal time frequency space (OTFS)-based integrated sensing and communication (ISAC) system comprising:

   a sample generator configured to generate a time-frequency domain sample including a delay pilot and a Doppler pilot each that is designed in the time-frequency domain based on data to be transmitted;
   a signal generator configured to generate an integrated sensing and communication (ISAC) signal through an orthogonal frequency division multiplexing (OFDM) modulation technique for the generated time-frequency domain sample; and
   a sensing acquisition unit configured to acquire a sensing parameter through a reflected signal received from a sensing target as the generated ISAC signal is transmitted.

10. The ISAC system of claim 9, wherein the sample generator is configured to generate a data matrix including random quadrature amplitude modulation (QAM) symbols to form the Doppler pilot, to generate the Doppler pilot in the delay-Doppler domain using the generated data matrix, and to transform the Doppler pilot generated in the delay-Doppler domain to the time-frequency domain through Fourier transform.

11. The ISAC system of claim 10, wherein the sample generator is configured to generate the delay pilot for estimating delay in the time-frequency domain.

12. The ISAC system of claim 10, wherein the sample generator is configured to generate the time-frequency domain sample including the Doppler pilot transformed to the time-frequency domain and the generated delay pilot.

13. The ISAC system of claim 9, wherein the sensing acquisition unit is configured to acquire a plurality of time domain samples corresponding to a specific OFDM symbol, to select a sample with the largest amplitude, and to if the magnitude of the selected sample with the largest amplitude in a specific delay slot of the time domain is greater than or equal to a threshold, determine that the reflected signal from the sensing target is returned after being delayed by a corresponding time interval.

14. The ISAC system of claim 13, wherein the sensing acquisition unit is configured to estimate delay and a channel coefficient using the determined reflected signal, and to estimate Doppler and a final channel coefficient using the estimated delay and channel coefficient.

15. The ISAC system of claim 14, wherein the sensing acquisition unit is configured to acquire fractional Doppler by dividing the magnitude of the channel coefficient acquired through the delay pilot and Doppler pilot power by the magnitude of the Doppler pilot, by generating an equation for a sine function, and by converting the generated equation to a polynomial equation using Talyor expansion.

# FIG. 1

# FIG. 2

delay profile over first OFDM symbol

# FIG. 3

Doppler Profile

# FIG. 4

<u>100</u>

Delay estimator

| Sample generator | ~ 410 |
| Signal generator | ~ 420 |
| Sensing acquisition unit | ~ 430 |

# FIG. 5

Start

Generate time-frequency domain sample including delay pilot and Doppler pilot each that is designed in time-frequency domain based on data to be transmitted ⌐∼ 510

Generate integrated sensing and communication (ISAC) signal through orthogonal frequency division multiplexing (OFDM) modulation technique for generated time-frequency domain sample ⌐∼ 520

Acquire sensing parameter through reflected signal received from sensing target as generated ISAC signal is transmitted ⌐∼ 530

End

Europäisches
Patentamt
European
Patent Office
Office européen
des brevets

# EUROPEAN SEARCH REPORT

**Application Number**

EP 25 21 3219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SRUTI S. ET AL: "Joint Association and Localization of Multiple Targets in an OTFS-Based Multistatic ISAC System", IEEE TRANSACTIONS ON AEROSPACE AND ELECTRONIC SYSTEMS., vol. 61, no. 5, 6 August 2024 (2024-08-06), pages 13459-13473, XP093374437, US ISSN: 0018-9251, DOI: 10.1109/TAES.2025.3578052 * abstract * * paragraph [0IIB] * * paragraph [0IIC] - paragraph [0IVA] * ----- | 1-15 | INV. H04L27/26 |
| A | IDS VAN DER WERF ET AL: "Optimal Pilot Design for OTFS in Linear Time-Varying Channels", ARXIV.ORG, CORNELL UNIVERSITY LIBRARY, 201 OLIN LIBRARY CORNELL UNIVERSITY ITHACA, NY 14853, 28 March 2024 (2024-03-28), XP091713029, * page 7, left-hand column * * figure 6b * * figure 6c * ----- | 1-15 | |

**TECHNICAL FIELDS SEARCHED (IPC)**

H04L

The present search report has been drawn up for all claims

| Place of search | Date of completion of the search | Examiner |
|---|---|---|
| Berlin | 10 March 2026 | Douglas, Ian |

EPO FORM 1503 03.82 (P4C01)